# EUROPÄISCHE PATENTSCHRIFT

(11) **EP 3 781 632 B1**
(45) Veröffentlichungstag und Bekanntmachung des Hinweises auf die Patenterteilung: **22.12.2021**
(21) Anmeldenummer: 18721680.9
(22) Anmeldetag: 17.04.2018
(51) Int. Cl.: C09D 5/00

(54) **FROSTSCHUTZMITTEL**
ANTIFREEZE COMPOSITION
ANTIGEL

(43) Veröffentlichungstag der Anmeldung: 24.02.2021
(73) Patentinhaber: Aqua-Concept Gesellschaft für Wasserbehandlung mbH, 82166 Gräfelfing (DE)
(72) Erfinder: PORADA, Thomas, 81377 München (DE); DETIG, Andreas, 82166 Gräfelfing (DE); KLUKAS, Ronald, 85247 Schwabhausen (DE)
(74) Vertreter: Hoefer & Partner Patentanwälte mbB
(86) Internationale Anmeldenummer: PCT/DE2018/100364
(87) Internationale Veröffentlichungsnummer: WO 2019/201363

(56) Entgegenhaltungen:
- WO-A1-2004/099350
- CN-A- 104 342 272

## Beschreibung

Die Erfindung betrifft ein Frostschutzmittel mit integriertem Korrosionsschutz.

Aus dem Stand der Technik sind Frostschutzmittel für unterschiedliche Metalle, insbesondere für metallische, wasserführende Leitungen, bekannt. Diese basieren oftmals auf einer Mischung von Mono- und Diethylenglykolen und Benzotriazol. Die antikorrosive Wirkung wird dabei durch hohe Konzentrationen an Benzotriazol erzeugt, das jedoch stark umweltbelastend und in der Wassergefährdungsklasse 1 eingestuft ist. Die Glykole dienen hierbei der Senkung des Gefrierpunktes.

Es ist eine Aufgabe der Erfindung ein effizientes, umweltfreundliches bzw. die Umwelt weniger schädigendes Frostschutzmittel mit integriertem Korrosionsschutz bereitzustellen, das sich durch eine hohe Stabilität, gute Verarbeitbarkeit und sichere Anwendung auszeichnet.

Die Lösung dieser Aufgabe erfolgt durch den Gegenstand des Anspruches 1.

Erfindungsgemäß wird ein Frostschutzmittel bereitgestellt, das mindestens eine Base, 5 bis 22 Masse-% Bernsteinsäure und 3 bis 60 Masse-% und insbesondere 3 bis 14,4 Masse-% Ethanol enthält. Sofern nichts Anderweitiges angegeben ist, beziehen sich alle hierin offenbarten Mengenangaben auf Masse-%, bezogen auf die Gesamtmasse des Frostschutzmittels.

Überraschend wurde gefunden, dass durch Kombination von Bernsteinsäure und Ethanol in den angegebenen Mengen Frostschutzmittel erhalten werden können, deren Festpunkte unterhalb des Gefrierpunktes von Wasser liegen und beliebig bis etwa -45 °C abgestuft werden können. Ein Gehalt an Ethanol von 3 bis 60 Masse-% ermöglicht dabei den überwiegend durch die enthaltene Bernsteinsäure gesenkten Gefrierpunkt zu stabilisieren und noch weiter abzusenken. Vorzugsweise liegt die maximale Gesamtmasse an Ethanol bei etwa 14,4 Masse-%, um zusätzlich die Anwendersicherheit und Transportsicherheit zu verbessern. Je höher der Gehalt an Ethanol ist, desto höher ist die Gefahr der Entflammbarkeit des Frostschutzmittels. Bei einem Maximalgehalt von 14,4 Masse-% ist jedoch von einer lediglich geringen Entflammbarkeit auszugehen, so dass das Frostschutzmittel neben einer sehr guten Frostschutzwirkung auch zusätzlich besonders sicher angewendet und transportiert werden kann.

Die angegebene Menge an Ethanol bezieht sich dabei auf reines Ethanol. Das Ethanol kann jedoch auch als vergällter Alkohol, beispielsweise mit Isopropanol vergällt, und somit insbesondere als 96 Masse-%ige ethanolische Lösung eingesetzt werden. Der Gehalt an Ethanol bezogen auf eine 96 Masse-%ige vergällte Ethanollösung würde dann, bezogen auf die Gesamtmasse des erfindungsgemäßen Frostschutzmittels, 15 Masse-% entsprechen. Als Vergällungsmittel kann beispielsweise auch Methylethylketoxim verwendet werden.

Die Menge an Bernsteinsäure, die insbesondere, um die Nachhaltigkeit des Frostschutzmittels zu erhöhen, als biologisch erzeugte Bernsteinsäure eingesetzt wird, liegt bei minimal 5 Masse-%, um einen ausreichenden Frostschutz bereitzustellen. Mehr als 22 Masse-% Bernsteinsäure führen zu einer verschlechterten Verarbeitbarkeit der Bernsteinsäure. Die Bernsteinsäure neigt in Konzentrationen von über 22 Masse-% zum Ausfallen. Zur weiteren Verbesserung der Stabilität des Frostschutzmittels wird somit mindestens eine Base eingesetzt, die die Bernsteinsäure deprotoniert, und damit ein Ausfallen der Bernsteinsäure, bei Anwendung der Bernsteinsäure im angegebenen Mengenbereich, aus dem Gemisch effizient verhindert. Dies führt ferner zu einer Verbesserung des Korrosionsschutzes, da die meisten Metalle bei sauren pH-Werten vermehrt korrodieren und insbesondere bei alkalischen pH-Werten keiner Korrosion oder sogar einer Passivierung unterliegen.

Zur weiteren Verbesserung der antikorrosiven Wirkung des erfindungsgemäßen Frostschutzmittels beträgt die Gesamtmasse an Acetaten und Essigsäure im erfindungsgemäßen Frostschutzmittel weniger als 0,1 Masse-% und insbesondere weniger als 0,05 Masse-%, bezogen auf die Gesamtmasse des Frostschutzmittels. Acetate und Essigsäure sind zwar gefrierpunktsenkende Mittel, führen aber bei Anwendung auf Metallen und Legierungen zu starker Korrosion der Metalle und Legierungen. Daher wird erfindungsgemäß auf den Zusatz von Essigsäure und ihren Salzen, den Acetaten, verzichtet. Das erfindungsgemäße Frostschutzmittel ist damit vorzugsweise frei von Essigsäure und Acetaten.

Das erfindungsgemäße Frostschutzmittel kann weitere funktionale Additive enthalten, beispielsweise Verdickungsmittel, Stabilisatoren, Tenside, Dispergiermittel und dergleichen. Der Gehalt dieser funktionalen Additive liegt jedoch insbesondere jeweils unter 1 Masse-%, bezogen auf die Gesamtmasse des Frostschutzmittels.

Durch die erfindungsgemäße Zusammensetzung des Frostschutzmittels wird ein hoch effektives Frostschutzmittel mit integriertem Korrosionsschutz bereitgestellt, das sich bei sehr gutem Korrosionsschutz durch eine stabile, sichere und gute Verarbeitbarkeit und Anwendbarkeit auszeichnet. Das erfindungsgemäße Frostschutzmittel belastet die Umwelt lediglich in äußerst geringem Umfang und ist als umweltfreundlich anzusehen.

Die Unteransprüche beinhalten vorteilhafte Weiterbildungen und Ausgestaltungen der Erfindung.

Eine vorteilhafte Weiterbildung des erfindungsgemäßen Frostschutzmittels ist dadurch gekennzeichnet, dass die Base Kalilauge ist. Unter Kalilauge wird eine wässrige Lösung von KOH verstanden, die in gewünschter Konzentration eingesetzt werden kann. Für die Verarbeitung ist eine wässrige KOH-Lösung mit einer Konzentration von 45 Masse-% im Hinblick auf die Anwendersicherheit und die Verarbeitbarkeit besonders gut geeignet. Kalilauge bewirkt eine effektive Deprotonierung der Bernsteinsäure und stabilisiert diese gleichzeitig in dem Ethanol enthaltenden Frostschutzmittel. Wenngleich andere Basen zur Deprotonierung von Bernsteinsäure dienen können, wird aufgrund des stabilisierenden Effekts vorzugsweise Kalilauge eingesetzt.

Zur Passivierung der vor Korrosion zu schützenden Metalle und Legierungen hat das erfindungsgemäße Frostschutzmittel vorzugsweise einen pH-Wert von maximal 11. Der pH-Wert wird durch den Gehalt der Base entsprechend eingestellt. Je neutraler der pH-Wert ist, desto höher ist die Anwendersicherheit des Frostschutzmittels. Ein pH-Wert von maximal 11, und insbesondere von maximal 10, ist in Bezug auf den erwünschten Korrosionsschutz des Frostschutzmittels bei gleichzeitig hoher Anwendersicherheit und guter Verarbeitbarkeit des Frostschutzmittels, bevorzugt. Ein besonders bevorzugter Bereich des pH-Wertes des Frostschutzmittels liegt zwischen 7,5 und 9,5.

Zur weiteren Verbesserung der Stabilität des Frostschutzmittels, insbesondere im Hinblick auf das Verhindern eines sich Absetzens oder Ausfallens der Bernsteinsäure, beträgt ein Masseverhältnis an 45 Masse-%iger Kalilauge zu Bernsteinsäure mindestens 2,1 : 1. Dies entspricht in etwa einem Molverhältnis von 2 : 1 an Kalilauge zu Bernsteinsäure.

Eine sehr effiziente Absenkung des Gefrierpunktes des Frostschutzmittels bei besonders hoher Stabilität wird vorteilhafterweise dadurch erzielt, dass die Gesamtmasse an Bernsteinsäure, bezogen auf die Gesamtmasse des Frostschutzmittels, 9 bis 18 Masse-% beträgt.

Zur weiteren Verbesserung des Korrosionsschutzes sowie unter anderem auch des Frostschutzes des erfindungsgemäßen Frostschutzmittels, enthält dieses, bezogen auf die Gesamtmasse des Frostschutzmittels, ferner vorteilhaft 0,02 bis 0,50 Masse-% mindestens eines Diazols und/oder eines Triazols. Aufgrund dieser sehr geringen Mengen an Diazol und/oder Triazol beruht die überwiegende Frostschutzwirkung jedoch auf der Kombination von Bernsteinsäure mit Ethanol. Die bevorzugt sehr geringen Gehalte an Diazol und/oder Triazol von maximal 0,05 Masse-% können dabei noch als umweltfreundlich angesehen werden, so dass durch diese Ausführungsform der Korrosionsschutz und Frostschutz optimiert werden können.

Aufgrund der sehr guten Stabilität in ethanolischen Lösungen und der damit erleichterten Herstellung und Verarbeitbarkeit des Frostschutzmittels, ist das Diazol oder Triazol vorteilhafterweise ausgewählt aus Benzotriazol, Tolyltriazol, Imidazol, mit aliphatischen Kohlenstoffresten substituierten Triazolen und Mischungen daraus. Als besonders effektiv im Hinblick auf die Korrosionsschutzwirkung hat sich Benzotriazol herausgestellt.

Zur weiteren Verbesserung des Frostschutzes kann das erfindungsgemäße Frostschutzmittel vorteilhafterweise mindestens einen weiteren Alkohol, ausgewählt aus der Gruppe bestehend aus: Monoethylenglykol, Monopropylenglykol, Dipropylenglykol, Glycerin, 1,3-Propandiol, 1-Propanol, 2-Propanol und Mischungen daraus, enthalten. Der Zusatz ist jedoch nicht erforderlich, da eine ausreichende Frostschutzwirkung bereits durch die Kombination von Bernsteinsäure und Ethanol erzielt wird. Zudem können hohe Gehalte an den vorstehend genannten weiteren Alkoholen die Stabilität des Frostschutzmittels beeinträchtigen, was z.B. zum Ausflocken oder Ausfallen der Bernsteinsäure nach Lagerung führt. Bevorzugt wird daher Ethanol als alleiniger Alkohol (neben etwaigem Vergällungsmittel) eingesetzt.

Wie bereits vorstehend dargelegt, kann das erfindungsgemäße Frostschutzmittel weitere funktionale Additive enthalten. Zur Visualisierung des Frostschutzmittels kann vorteilhaft mindestens eine farbgebende Substanz enthalten sein. Farbgebende Substanzen im Sinne der vorliegenden Erfindung umfassen sowohl Pigmente als auch lösliche Farbstoffe. Aus Umweltschutzgründen und Gründen der Umweltverträglichkeit kommen insbesondere Lebensmittelfarbstoffe zur Anwendung. Hierunter haben sich insbesondere Food Yellow 1, Food Yellow 2, Food Yellow 3 und Food Yellow 4 als vorteilhaft herausgestellt, da diese Farbstoffe bereits bei sehr niedrigen Einsatzkonzentrationen, beispielsweise von weniger als 0,01 bis 0,02 Masse-%, bezogen auf die Gesamtmasse des Frostschutzmittels, eine gute Farbgebung ergeben.

Ein weiteres bevorzugtes funktionales Additiv ist ein Homo-, Co- und/oder Terpolymer teilneutralisierter Polycarboxylate. Es kann als Dispergierhilfsmittel und als die Frostschutzwirkung verbesserndes Additiv eingesetzt werden. Vorteilhafte Konzentrationen sind 0,02 bis 0,06 Masse-%, bezogen auf die Gesamtmasse des erfindungsgemäßen Frostschutzmittels. Ein beispielhaft sehr gut wirksames Polycarboxylat ist Acumer^{®} 3100.

Ferner kann das Frostschutzmittel vorzugsweise Wasser enthalten. Zur Herstellung des Frostschutzmittels kann eine Menge an Wasser eingesetzt werden, mit der der gewünschte Gefrierpunkt erzielt werden kann. Das hierzu verwendete Wasser ist insbesondere vollentsalztes Wasser, so genanntes VE-Wasser. Sofern erforderlich, kann der pH-Wert zudem durch entsprechende Dosierung der Base in einen gewünschten Bereich gebracht werden.

Die vorliegende Erfindung wird durch die Beispiele und die angefügte Figur veranschaulicht.

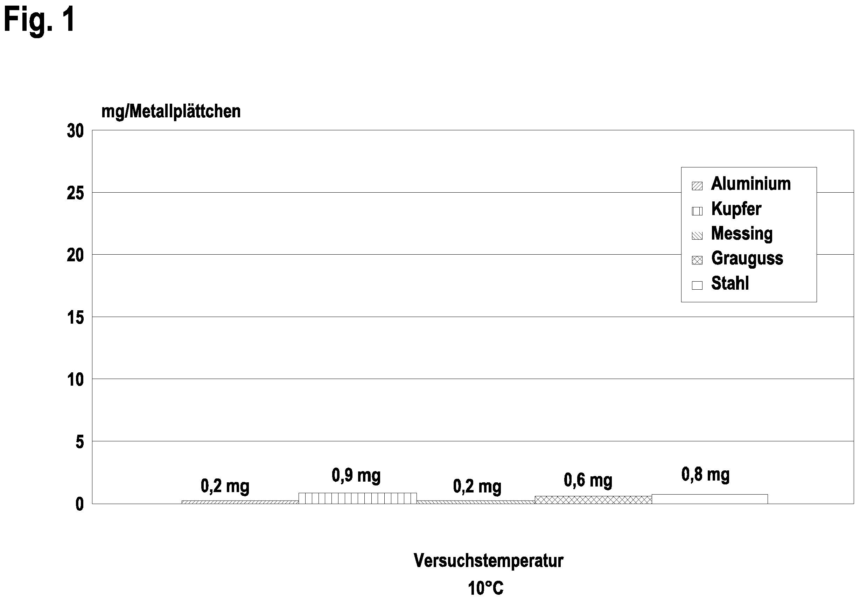

Figur 1 zeigt eine graphische Übersicht des korrosiven Abtrags unterschiedlicher Materialien.

### Beispiele

Im Folgenden werden zwei Beispiele offenbart, die die vorliegende Erfindung veranschaulichen, diese jedoch nicht darauf beschränken sollen:

### Beispiel 1: Frostschutzmittel

| Versuch | 1 | 2 | 3 | 4 | 5 | 6 |
|---|---|---|---|---|---|---|
| Bernsteinsäure | 18,22 | 9,41 | 5,0 | 18,22 | 9,41 | 13,81 |
| 45 Masse-%ige wässrige KOH | 38,45 | 19,85 | 10,55 | 38,45 | 19,85 | 29,15 |
| Ethanol (96 Massse-%ig; 4 Masse-% Isopropanol) | 9,15 | 3,05 | 12,20 | 3,05 | 9,15 | 12,20 |
| Benzotriazol | 0,05 | 0,05 | 0,05 | 0,05 | 0,05 | 0,05 |
| Wasser | 34,13 | 67,64 | 72,20 | 40,23 | 61,54 | 44,79 |
| Summe | 100,0 | 100,0 | 100,0 | 100,0 | 100,0 | 100,0 |
| pH | 9,3 | 8,1 | 8,4 | 9,1 | 8,8 | 9,3 |
| Gefrierpunkt | -29,9 | -7,5 | -11,1 | -20,3 | -13,9 | -24,9 |

| Versuch | 7 | 8 | 9 | 10 | 11 | 12 | 13 | 14 | 15 |
|---|---|---|---|---|---|---|---|---|---|
| Bernsteinsäure | 18,22 | 13,81 | 5,00 | 13,81 | 18,22 | 22,63 | 17,50 | 22,63 | 22,63 |
| 45 Masse-%ige wässrige KOH | 38,45 | 29,15 | 10,55 | 29,15 | 38,45 | 47,75 | 36,93 | 47,75 | 47,75 |
| Ethanol (96 Massse-%ig; 4 Masse-% Isopropanol) | 3,05 | 6,10 | 6,10 | 12,20 | 9,15 | 9,15 | 15,00 | 6,10 | 6,10 |
| Benzotriazol | 0,05 | 0,05 | 0,05 | 0,05 | 0,05 | 0,05 | 0,05 | 0,05 | - |
| VE-Wasser | 40,23 | 50,89 | 78,30 | 44,79 | 34,13 | 20,42 | 30,52 | 23,47 | 23,52 |
| Summe | 100,0 | 100,0 | 100,0 | 100,0 | 100,0 | 100,0 | 100,0 | 100,0 | 100,0 |
| pH-Wert | 9,4 | 8,8 | 8,2 | 9,2 | 9,5 | 8,4 | 9,0 | 9,2 | 9,2 |
| Gefrierpunkt | -21,5 | -17,4 | -6,4 | -26,6 | -31,7 | -45,5 | -43,0 | -39,0 | -39,0 |

Zur Herstellung des Frostschutzmittels wurden das Wasser und das Ethanol vermischt und anschließend die 45 Masse-%ige wässrige Kalilauge zugegeben. Daraufhin wurden die Bernsteinsäure sowie das Benzotriazol (im Fall von Beispiel 15 kein Benzotriazol) zugefügt. Die Mischung wurde solange bei ca. 30-50 °C gerührt, bis alle Substanzen homogen vermengt waren.

In der obigen Tabelle sind die jeweiligen pH-Werte der Frostschutzmittel sowie deren Gefrierpunkte angegeben. Durch die Kombination von Ethanol und Bernsteinsäure konnten sehr gute Gefrierpunkte erzielt werden. Der Zusatz von Benzotriazol hatte hierbei keine Auswirkung auf den Gefrierpunkt, verbessert aber den Korrosionsschutz.

Die Frostschutzmittel zeigten guten Frostschutz und eine gute Korrosionsschutzwirkung gegenüber den meisten metallischen Werkstoffen/Legierungen.

### Beispiel 2: Korrosionsschutz

Für den vorliegenden Versuch wurde die Mischung aus Beispiel 13 herangezogen.

Um das Frostschutzmittel auf seinen Korrosionsschutz hin zu überprüfen wurde folgende Prozedur zur Anwendung gebracht:
In einem 1 L-Glasgefäß mit Flanschdeckel wurden 750 ml des zu untersuchenden Frostschutzmittels zusammen mit einem Magnetrührer eingebracht und auf 10°C temperiert.

Auf einem mit Isoliermaterial ummantelten Messingstab wurden Metallplättchen mit den Abmessungen 2" x 1" x 1/8" zentral so mit entsprechenden Metall/Teflonspacern fixiert, dass die Metallplättchen vollkommen von dem Frostschutzmittel benetzt und umspült wurden. Zur Sicherstellung der Umspülung standen die Metallplättchen auf an dem ummantelten Messingstab mit Schrauben fixierten hochstehenden Messingbeinen. Folgende Materialien wurden hierbei eingesetzt:

| **Material** | **Bezeichnung** |
|---|---|
| Aluminium | UNS A23190 |
| Grauguß | UNS F10007 |
| Kupfer | UNS C11000 |
| Messing | UNS C26000 |
| Stahl | UNS G10200 |

Vor Versuchsbeginn wurden oben beschriebene Metallplättchen mittels Analysenwaage ausgewogen. Der 14-tägige Versuch startete mit dem Rührvorgang mit einer Umdrehung von 510 rpm. Am Versuchsende wurden die Metallplättchen einer der Norm ASTM D-1384-12 entsprechenden Reinigungsprozedur unterzogen und zur erneuten Auswaage gebracht. Die Abträge wurden mit der Einheit mg/Metallplättchen erfasst.

Die verwendeten Materialien zeigten folgende Ergebnisse:
1. Aluminium: 0,2 mg
2. Kupfer. 0,9 mg
3. Messing: 0,2 mg
4. Grauguss: 0,6 mg
5. Stahl: 0,8 mg.

Ein Vergleich dieser Werte wird durch Figur 1 veranschaulicht. Hierbei ist der korrosive Abtrag des entsprechenden Materials als entsprechender Balken dargestellt. Das Frostschutzmittel zeigte für alle Metalle/Legierungen sehr gute Werte, also lediglich sehr geringe Abtragsraten, was einer exzellenten Korrosionsschutzwirkung entspricht.

## Patentansprüche

1. Frostschutzmittel enthaltend:
- mindestens eine Base,
- 5 bis 22 Masse-% Bernsteinsäure, bezogen auf die Gesamtmasse des Frostschutzmittels, und
- 3 bis 60 Masse-%, insbesondere 3 bis 14,4 Masse-% Ethanol, bezogen auf die Gesamtmasse des Frostschutzmittels,
wobei die Gesamtmasse an Acetaten und Essigsäure im Frostschutzmittel weniger als 0,1 Masse-%, insbesondere weniger als 0,05 Masse-%, bezogen auf die Gesamtmasse des Frostschutzmittels, beträgt.

2. Frostschutzmittel nach Anspruch 1, **dadurch gekennzeichnet, dass** die Base Kalilauge, insbesondere 45 Masse-%ige Kalilauge, ist.

3. Frostschutzmittel nach Anspruch 1 oder 2, **dadurch gekennzeichnet, dass** der pH-Wert des Frostschutzmittels maximal 11,0, insbesondere maximal 10,0, beträgt.

4. Frostschutzmittel nach Anspruch 2 oder 3, **dadurch gekennzeichnet, dass** ein Masseverhältnis an 45 Masse-%iger Kalilauge zu Bernsteinsäure mindestens 2,1 : 1 beträgt.

5. Frostschutzmittel nach einem der vorhergehenden Ansprüche, **dadurch gekennzeichnet, dass** das Frostschutzmittel 9 bis 18 Masse-% Bernsteinsäure enthält.

6. Frostschutzmittel nach einem der vorhergehenden Ansprüche, ferner enthaltend 0,02 bis 0,50 Masse-% mindestens eines Diazols und/oder eines Triazols.

7. Frostschutzmittel nach Anspruch 6, **dadurch gekennzeichnet, dass** das Diazol oder Triazol ausgewählt ist aus Benzotriazol, Tolyltriazol, Imidazol, mit aliphatischen Kohlenstoffresten substituierten Triazolen und Mischungen daraus.

8. Frostschutzmittel nach einem der vorhergehenden Ansprüche, ferner enthaltend mindestens einen weiteren Alkohol, ausgewählt aus der Gruppe bestehend aus: Monoethylenglykol, Monopropylenglykol, Dipropylenglykol, Glycerin, 1,3-Propandiol, 1-Propanol, 2-Propanol und Mischungen daraus.

9. Frostschutzmittel nach einem der vorhergehenden Ansprüche, **dadurch gekennzeichnet, dass** das Frostschutzmittel frei ist von Acetaten und Essigsäure.

10. Frostschutzmittel nach einem der vorhergehenden Ansprüche, ferner enthaltend Wasser.

## Claims

1. Antifreeze composition containing:
- at least one base,
- 5 to 22% by mass of succinic acid, based on the total mass of the antifreeze composition, and
- 3 to 60% by mass, in particular 3 to 14.4% by mass of ethanol, based on the total mass of the antifreeze composition,
wherein the total mass of acetates and acetic acid in the antifreeze composition is less than 0.1% by mass, in particular less than 0.05% by mass, based on the total mass of the antifreeze composition.

2. Antifreeze composition according to claim 1, **characterized in that** the base is potassium hydroxide solution, in particular 45% by mass potassium hydroxide solution.

3. Antifreeze composition according to claim 1 or 2, **characterized in that** the pH of the antifreeze composition is at most 11.0, in particular at most 10.0.

4. Antifreeze composition according to claim 2 or 3, **characterized in that** a mass ratio of 45% by mass potassium hydroxide solution to succinic acid is at least 2.1:1.

5. Antifreeze composition according to one of the preceding claims, **characterized in that** the antifreeze composition contains 9 to 18% by mass of succinic acid.

6. Antifreeze composition according to one of the preceding claims, further containing 0.02 to 0.50% by mass of at least one diazole and/or a triazole.

7. Antifreeze composition according to claim 6, **characterized in that** the diazole or triazole is selected from benzotriazole, tolyltriazole, imidazole, triazoles substituted with aliphatic carbon radicals and mixtures thereof.

8. Antifreeze composition according to one of the preceding claims, further containing at least one further alcohol selected from the group consisting of: monoethylene glycol, monopropylene glycol, dipropylene glycol, glycerol, 1,3-propanediol, 1-propanol, 2-propanol and mixtures thereof.

9. Antifreeze composition according to one of the preceding claims, **characterized in that** the antifreeze composition is free of acetates and acetic acid.

10. Antifreeze composition according to one of the preceding claims, further containing water.

## Revendications

1. Antigel contenant :
- au moins une base,
- 5 à 22 % en poids d'acide succinique par rapport au poids total de l'antigel, et
- 3 à 60 % en poids, en particulier 3 à 14,4 % en poids d'éthanol, par rapport au poids total de l'antigel,
dans lequel le poids total en acétates et en acide acétique dans l'antigel est inférieur à 0,1 % en poids, en particulier inférieur à 0,05 % en poids, par rapport au poids total de l'antigel.

2. Antigel selon la revendication 1, **caractérisé en ce que** la base est de la potasse, en particulier de la potasse à 45 % en poids.

3. Antigel selon la revendication 1 ou 2, **caractérisé en ce que** la valeur pH de l'antigel est au maximum de 11,0, en particulier au maximum de 10,0.

4. Antigel selon la revendication 2 ou 3, **caractérisé en ce qu'**un rapport de poids de potasse à 45 % en poids par rapport à l'acide succinique est d'au moins 2,1:1.

5. Antigel selon l'une quelconque des revendications précédentes, **caractérisé en ce que** l'antigel contient 9 à 18 % en poids d'acide succinique.

6. Antigel selon l'une quelconque des revendications précédentes, contenant en outre 0,02 à 0,50 % en poids d'au moins un diazole et/ou d'un triazole.

7. Antigel selon la revendication 6, **caractérisé en ce que** le diazole ou le triazole est choisi parmi le benzotriazole, le tolyltriazole, l'imidazole, des triazoles substitués par des radicaux de carbone aliphatiques et des mélanges de ceux-ci.

8. Antigel selon l'une quelconque des revendications précédentes, contenant en outre au moins un autre alcool choisi parmi le groupe constitué de : monoéthylène glycol, monopropylène glycol, dipropylèneglycol, glycérine, 1,3-propanediol, 1-propanol, 2-propanol et des mélanges de ceux-ci.

9. Antigel selon l'une quelconque des revendications précédentes, **caractérisé en ce que** l'antigel est sans acétates et sans acide acétique.

10. Antigel selon l'une quelconque des revendications précédentes, contenant en outre de l'eau.
